# EUROPEAN PATENT APPLICATION

(11) **EP 3 879 495 A1**
(43) Date of publication of application: **15.09.2021**
(21) Application number: 20161733.9
(22) Date of filing: 09.03.2020
(51) Int. Cl.: G06T 11/00

(54) **IMAGE GENERATION FOR TRAINING A NEURAL NETWORK**

(71) Applicant: MYCRONIC AB, 183 03 Täby (SE)
(72) Inventor: Grafström, Daniel, 123 48 Farsta (SE); Romain, Roux, 38120 Sain Egrève (FR)
(74) Representative: AWA Sweden AB

(57) **Abstract**

A method for training a neural network to generate an image of an element of a printed circuit board "PCB", the method comprising generating a first image of at least part of an element of a PCB, the first image having a first resolution, generating at least one second image of the at least part of the element of the PCB, the second image having a second resolution lower than the first resolution, using the first image as a ground truth for the neural network, and using the at least one second image as input training data for the neural network.

## Description

### Field

The present disclosure relates generally to the field of image generation, and in particular to a method for generating images for training a neural network.

### Background

The manufacture of electronic printed circuit boards (PCBs) may be performed in a number of different ways. Surface mount technology (SMT) is becoming a more preferable method of automated production of electronic PCBs. This technology includes systems for jet printing of solder paste, pick-and-place (PnP) mounting of components on a substrate or a substrate for a system in package (SiP) component, and inspection of various stages of the process. The expression "pick and place" describes a mounting operation in which a mounting head is moved to a component feeder area, where the mounting head picks up one or more components from one or more of the component feeders, and then is moved to a mounting area where the mounting head places the component or components on the substrate. Inspection of a PCB may be performed after solder paste has been jet printed, after the components have been assembled by a PnP system, and after the PCB has been baked. Inspection is performed to ensure the components have been placed in the correct locations.

Jet printing, PnP and inspection systems all use imaging apparatus, for example to select the correct components or view their location on a PCB. Examples of such imaging apparatus are 2-dimensional (2D) and 3-dimensional (3D) cameras, laser scanners, pattern projection with cameras, line scan cameras, depth sensors, and the like. When using such imaging apparatus, there is a trade-off between the quality of captured images and the speed of the jet printing, PnP or inspection process. By compromising image quality to increase the speed of a process, several issues can arise. For example, the captured images may have a lower resolution, higher noise or higher distortion than desired, or may be out of focus. This can be caused by faster image sampling rates, low capability equipment, poor lightning or short depth of field (DOF).

The use of such lower quality images by automatic algorithms or by human users can significantly hamper a jet printing, PnP or inspection process, where identification of small, intricate structures is important. For example, when such images are used by automatic decision-making algorithms, such as algorithms for deciding whether a manufactured piece conforms to a required specification, the low quality of the images can increase the rate of undesirable false positive and/or false negative decisions.

There is therefore a need for a system and method capable of increasing, to at least some extent, the quality of image capture in a PCB manufacturing process.

### Summary

The present disclosure uses the concept of super-resolution to increase the quality of image capture in a PCB manufacturing process. Super-resolution techniques take low-resolution images and produce images having a higher resolution. The disclosed methods use a neural network that takes low-resolution, noisy or distorted images and outputs high-resolution images that can be used for accurate jet printing, PnP or inspection functionality. As such, the neural network is used to create high-resolution images by filling in information missing in the take low-resolution images captured by the imaging apparatus of the system. Images of different resolution can be generated in a number of different ways to ensure that there is sufficient training data to train the neural network adequately. This approach compensates for limitations in current imaging systems, which allows for the implementation of faster jet printing, PnP or inspection systems and processes using the same imaging apparatus as in current approaches.

In accordance with an aspect of the disclosure, there is provided a method for training a neural network to generate an image of an element of a printed circuit board "PCB", the method comprising generating a first image of at least part of an element of a PCB, the first image having a first resolution, generating at least one second image of the at least part of the element of the PCB, the second image having a second resolution lower than the first resolution, and using the first image as a ground truth for the neural network using the at least one second image as input training data for the neural network.

Optionally, generating the first image comprises capturing an image of the element of the PCB at the first resolution using a first image capture device. Optionally, generating the at least one second image comprises capturing at least one image of the element of the PCB at the second resolution using the first image capture device. Optionally, generating the at least one second image comprises capturing at least one image of the element of the PCB at the second resolution using a second image capture device.

Optionally, generating the first image comprises capturing a scan of the element of the PCB at a first scanning speed. Optionally, generating at least one second image comprises reducing the resolution of the first image from the first resolution to the second resolution by removing one or more pixels from the first image. Optionally, generating at least one second image comprises capturing a scan of the element of the PCB at a second scanning speed higher than the first scanning speed.

Optionally, generating the at least one first image comprises capturing an image of a first version of the element of the PCB at the first resolution, and generating at least one second image comprises capturing an image of a second version of the element of the PCB at the first resolution, wherein the first version is larger than the second version.

Optionally, generating the first image comprises capturing an image of each of at least two subparts of the element of the PCB at a third resolution, and generating an image of the whole element of the PCB from the images of the subparts. Optionally, generating the at least one second image comprises capturing at least one image of the whole element of the PCB at the second resolution. Optionally, the second resolution is equal to the third resolution.

Optionally, generating the first image comprises capturing an image of the element of the PCB and applying a generative adversarial network "GAN" to the captured image to generate the first image.

Optionally, generating the at least one second image comprises reducing the resolution of the first image from the first resolution to the second resolution by applying a Neural Style Transfer "NST" algorithm to the first image. Optionally, the neural network is a U-Net. Optionally, the method further comprises training the neural network based on the input data and the ground truth. Optionally, the method further comprises assessing performance of the neural network by calculating a loss function based on feature extractions, distance computations and a mixture function.

Optionally, the first image and/or the at least one second image is a three dimensional image or a depth map. Optionally, the element of the PCB is an element of a fully or partially assembled PCB. Optionally, the element of the PCB is an electrical component.

In accordance with an aspect of the disclosure, there is provided a method for generating an image of an element of a printed circuit board "PCB", the method comprising receiving a captured image of at least part of an element of a PCB, the captured image having a first resolution, inputting the captured image to a neural network, and generating an enhanced image of the at least part of the element of the PCB using the neural network, the enhanced image having a second resolution higher than the first resolution. Optionally, the captured image is captured using an image capture device of a jet printing system, pick-and-place system or an inspection system.

In accordance with an aspect of the disclosure, there is provided a computer-readable medium having stored thereon instructions that, when executed by one or more processors cause execution of the method.

By taking this approach, many advantages are realised. For example, accurate jet printing, PnP processing or inspection can be performed based on simpler and lower quality imaging systems, even in the case where small, intricate components need to be identified and placed. Furthermore, jet printing, PnP and inspection processes can be sped up, as the time taken for high quality imaging is not required. By generating images of different resolution in a number of different ways, it can be ensured that the neural network is trained to recognise features and produce high-resolution output even if there are a number of issues with the original image capture.

### Brief Description of the Drawings

Exemplary embodiments of the disclosure shall now be described with reference to the drawings in which:
FIG. 1 partially and schematically shows an embodiment of an optical inspection system according to an example embodiment of the present disclosure;
FIG. 2 schematically illustrates an image enhancement module of an optical inspection system according to an example embodiment of the present disclosure;
FIG. 3 schematically illustrates a processing system for training a neural network according to an example embodiment of the present disclosure;
FIG. 4 is a flow diagram representing steps in a method for training a neural network according to an example embodiment of the present disclosure;
FIGs 5a-h are flow diagrams representing techniques for generating training data for training a neural network according to example embodiments of the present disclosure;
FIG. 6 schematically illustrates a loss function that describes the performance of a neural network according to an example embodiment of the present disclosure;
FIG. 7 is a flow diagram representing steps in a method for using the neural network in a jet printing, PnP or inspection system network according to an example embodiment of the present disclosure;
FIG. 8 shows a schematic view of a computer-readable medium encoded with instructions that, when executed on a processor, performs the disclosed methods.

Throughout the description and the drawings, like reference numerals refer to like parts.

### Specific Description

SMT for automated production of electronic PCBs includes systems for jet printing and PnP mounting of components on a substrate or a substrate for a SiP component. Once solder paste has been jet printed, or PCB components have been assembled by a PnP system, inspection may be performed to ensure the components have been placed in the correct locations. Jet printing, PnP and inspection systems may all use imaging apparatus, for example to select the correct components or view their location on a PCB. Examples of such imaging apparatus are 2D and 3D cameras, laser scanners, pattern projection with cameras, line scan cameras, depth sensors, and the like.

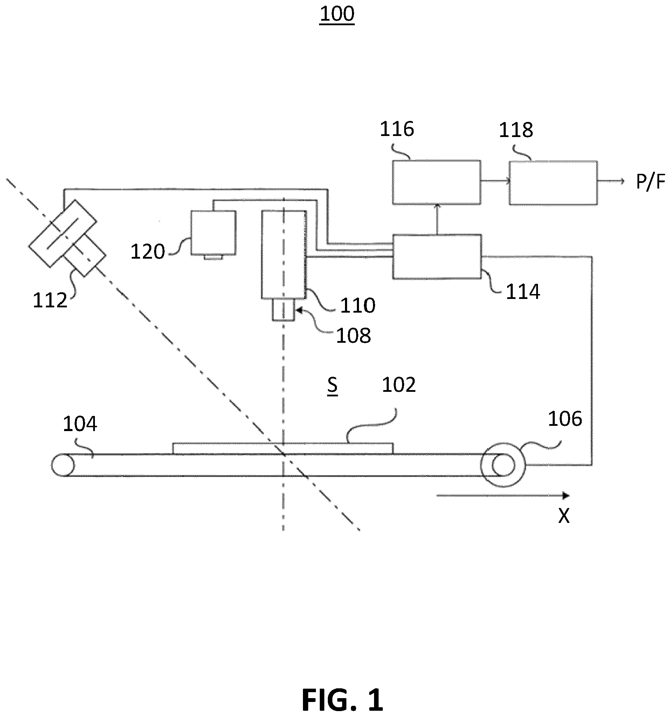

FIG. 1 partially and schematically shows an embodiment of an optical inspection system 100, which may be used for the optical inspection of PCBs. Each PCB 102 is placed on a conveyor 104, which may be a planar conveyor. Conveyor 104 is capable of displacing PCBs in a direction X, for example a horizontal direction, to take them to a region of optical inspection, which will be called a scene S, where images of the PCB may be acquired.

As an example, conveyor 104 comprises an assembly of one or more conveyor belts and one or more rollers, driven by a rotating electrical motor 106. As a variant, the conveyor 104 could alternatively comprise a linear motor configured to displace a carriage supporting the PCBs. A PCB may correspond to a rectangular board having a length and a width varying from 50 mm to 550 mm.

The system 100 comprises an image acquisition system 108 configured to acquire images of the circuit board. As an example, the image acquisition system 108 comprises an image projection device 110 comprising at least one projector, a single projector 110 being shown in FIG. 1. When a plurality of projectors 110 are present, projectors 110 may be substantially aligned along a direction perpendicular to direction X.

The image acquisition system 108 comprises an image acquisition device 112 comprising at least one digital camera, a single camera 112 being shown in FIG. 1. When a plurality of cameras 112 are present, cameras 112 may be substantially aligned, for example in groups of cameras, preferably along a direction perpendicular to direction X and/or may be arranged on either side of projector(s) 110.

As an example, projector 110 and camera 112 are coupled to a control device 114. The control device 114 is configured to control the image acquisition system 108, and also the conveyor 104, via the motor 106. Furthermore, the control device 114 may be configured to generate 2D and/or 3D images based on image data from the image acquisition system 108 and the camera 112, and to provide these images to an image enhancement module 116.

The image enhancement module 116 increases the resolution of images captured by the image acquisition system 108 and/or the camera 112. According to the embodiments described in more detail below, the image enhancement module 116 comprises one or more artificial neural networks. The image enhancement module 116 provides images with increased resolution to a computation device 118.

Unless specifically stated, the resolution of an image can be either the pixel resolution or the spatial resolution of the image. The pixel resolution represents a pixel count in a digital image. It is often expressed as a number of rows (pixels along a height of an image) and a number of columns (pixels along a width of the image). An image sensor may have a pixel resolution corresponding to the number of pixels it is able to capture. The spatial resolution is a measure of how closely lines can be resolved in an image, and depends on properties of the system creating the image as well as the pixel resolution. For practical purposes the clarity of the image is decided by its spatial resolution, not the number of pixels in an image. In effect, spatial resolution refers to the number of independent pixel values per unit length.

The computation device 118 may be configured to apply an automatic inspection algorithm to the enhanced images, and generate an output signal (P/F) indicating whether the PCB has passed (P) or failed (F) the inspection. In particular, the inspection algorithm may decide whether a manufactured piece conforms to a required specification.

According to an alternative embodiment, rather than comprising the projector 110, the acquisition system 108 comprises a camera, such as a telecentric camera, arranged vertically in line with scene S, for example, at the location of projector 110 in FIG. 1, and coupled to control device 114.

The optical inspection system 100 may also comprise a further acquisition system 120, which may correspond to a laser scanner, altitude detector or depth map sensor. The control device 114 may be further configured to control the acquisition system 120. The acquisition system 120 is configured to capture image and/or depth data, which is sent to the computation device 118 via the image enhancement module 116, such that the inspection may also be based on this image or depth map.

The aim of the optical inspection system 100 is to detect automatically when a manufactured object does not meet a desired production quality. For example, in the case of a PCB, this may involve detecting the presence and/or shape of one or more solder joints, verifying an extent of warpage, or the verification of other visible features that may indicate a non-conformal object. However, more generally, the optical inspection can be used to detect any visible defects in a manufactured object.

Whilst an optical inspection system 100 is shown in FIG. 1, it will be appreciated that a jet printing or PnP system may also employ one or more of the features of the optical inspection system 100, in particular the image enhancement module 116. As such, an image enhancement module 116 may also increase the resolution of images captured by a jet printing or PnP system.

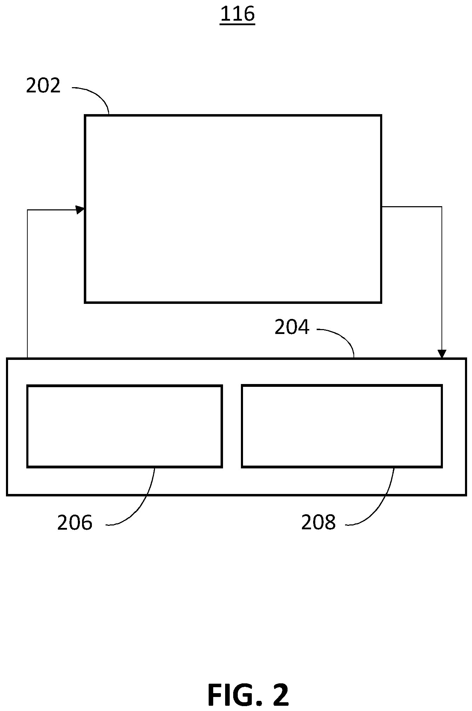

FIG. 2 schematically illustrates the image enhancement module 116 of the optical inspection system 100 of FIG. 1 according to an example embodiment of the present disclosure. The image enhancement module 116 comprises an artificial neural network 202, and a memory 204. The neural network could be located in the memory 204 or in a separate memory of the image enhancement module 116. One or more input images 206, captured for example by the image acquisition system 108 and/or the camera 112 shown in Fig. 1, are stored in the memory 204. The input images 206 are processed by the neural network 202. The neural network 202 provides one or more enhanced images 208 back to the memory 204.

As known by those skilled in the art, an artificial neural network (hereafter simply "neural network") is a computing architecture that aims to mimic to some extent the network of biological neurons in a human brain. Such neural networks generally comprise a network of artificial neurons that receive inputs, combine these inputs with their internal state and often with a threshold, and produce an output signal. Outputs of neurons are coupled to the inputs of other neurons by connections, which are often referred to as synapses (their equivalent in the biological brain). These connections apply weights to the signals propagated between the output of one or more neurons and the input of another neuron. The function used to generate the input to a neuron, based on the outputs of its predecessor neurons and the connections as a weighted sum, is known as the propagation function.

In some embodiments, the neural network 202 of FIG. 2 has an architecture based on a U-Net approach, as described in more detail in the publication entitled "U-Net: Convolution Networks for Biomedical Image Segmentation", O.Ronneberger, P.Fischer and T.Brox, 18 May 2015, Lecture Notes in Computer Science book series, LNCS, volume 9351. Additionally or alternatively, the neural network 202 includes one or more attention layers, as described in the publication entitled "Self-Attention Generative Adversarial Networks", H.Zhang, I.Goodfellow, D.Metaxas and A.Odena, 14 June 2019, PMLR 2019. Furthermore, the neural network 202 may additionally or alternatively be based on a loss function known as "perceptual loss" as described in more detail in the publication entitled "Perceptual Losses for Real-time Style Transfer and Super-Resolution", J.Johnson, A.Alahi, L.Fei-Fei, 26 March 2016

During a training phase, an example of which is described in more detail below, the neural network 202 automatically learns how to enhance captured images in order to improve their resolution. In particular, this involves the gradual refinement of the various parameters of the various neurons and connections, such as the stored states of the neurons, the connections between neurons, and the propagation functions for generating the neuron inputs based on the output of one or more predecessor neurons. Thus, the trained neural network 202, once trained, is able to enhance captured images in an efficient manner.

An advantage of the image enhancement module 116 shown in FIG. 2 is that, by using a trained neural network to enhance captured images, the performance of a jet printing, PnP or quality inspection system applied to the images can be significantly improved. For example, accurate jet printing, PnP processing or inspection can be performed based on simpler and lower quality imaging systems, and these processes can be faster, as the time taken for high quality imaging is not required.

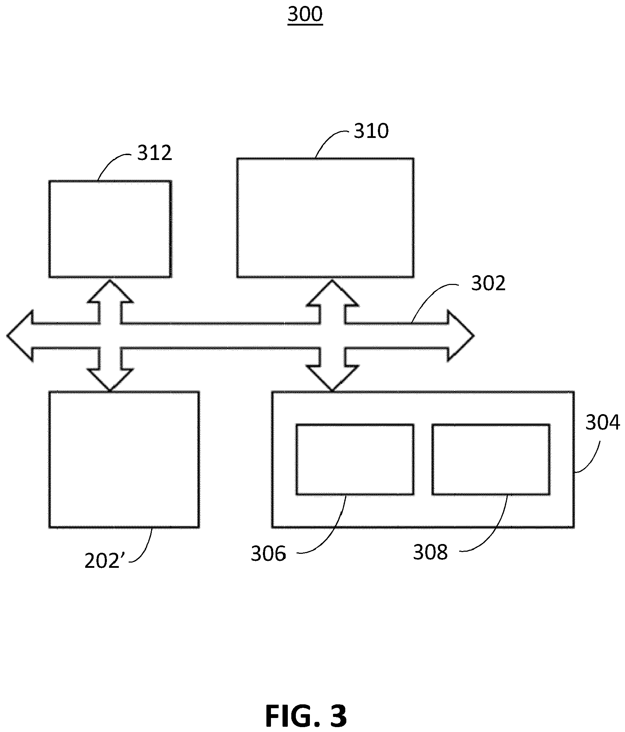

FIG. 3 schematically illustrates a processing system 300 for training a neural network, such as the neural network 202 of FIG. 2, according to an example embodiment of the present disclosure. The system 300 comprises the untrained neural network 202', coupled, for example via a bus 302, to a memory 304, a processing device 310 and an instruction memory 312.

The memory 304 may store a plurality of relatively low-resolution input images 306. Furthermore, the memory 304 may store one or more relatively high-resolution ground truth images 308. The input images 206 and the ground truth images 308 may be generated in a number of ways, as will be described below. A processing device 310, which may comprise one or more processors, is also coupled to the bus 302. For example, the processing device 310 is under control of instructions stored in an instruction memory 312, which may be a random access memory (RAM).

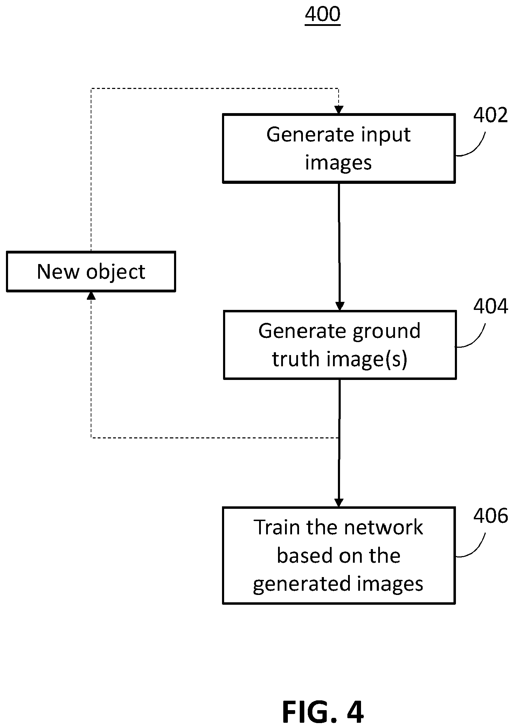

FIG. 4 is a flow diagram representing steps in a method 400 for training a neural network according to an example embodiment of the present disclosure. This method may be implemented by the processing system 300 in order to train the neural network 202'. In particular, the method may be implemented by software executed by the processing device 310.

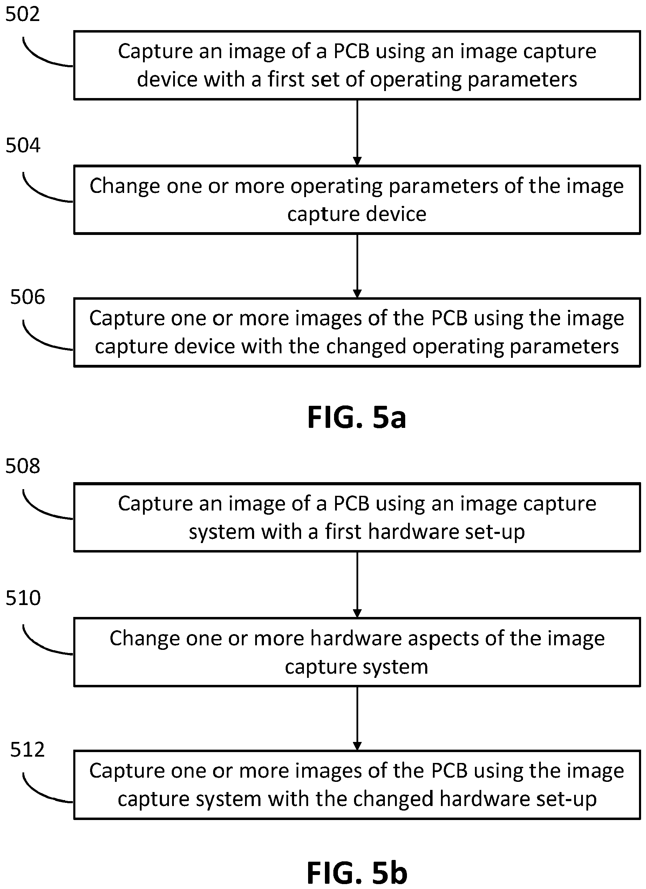

In step 402, relatively low-resolution input images are generated for use in training the neural network. The images may be images of a PCB. For example, they may be images of at least part of a partially or fully assembled PCB, or images of at least part of a component of a PCB. The images may be 2D images, 3D images, depth maps, or other suitable images of a PCB. These input images may be stored to the memory 304 of FIG. 3 as the input images 306. Generation of the input images is disclosed in more detail in relation to FIGs 5a-h.

In step 404, at least one relatively high-resolution ground truth image is generated for use in training the neural network. The ground truth image should have a higher resolution than the input images generated in step 402. The image may be an image of a PCB. For example, it may be an image of at least part of a partially or fully assembled PCB, or an image of at least part of a component of a PCB. The image may be a 2D image, a 3D image, a depth map, or other suitable image of a PCB. The ground truth image may be stored to the memory 304 of FIG. 3 as the ground truth images 308. In some embodiments, the same number of high-resolution ground truth images are generated as the number of low-resolution input images, such that a number of input-ground truth pairs are created. Generation of the input images is disclosed in more detail in relation to FIGs 5a-h.

After step 404, in some embodiments the steps 402 and 404 are repeated for a new object. For example, the new object is a new image different from the images previously produced. The new object may be generated using the same process as the previous images, but with different parameters, or may be generated using a different process. The steps 402 and 404 may be repeated over many iterations for many new objects, for example for hundreds, thousands or even millions of objects. In this way, a sufficient amount of training data is generated. In some embodiments, the number of input and ground truth images can be augmented in other ways known in the art, for example by rotating, translating, flipping and/or transposing a ground truth image and its corresponding input image(s), and/or by adding noise or spatial distortion, or effecting a brightness change, such that new training data is created.

In step 406, the neural network 302 is for example trained based on the input images generated in step 402 and the ground truth images generated in step 404. As discussed above, this involves the gradual refinement of the various parameters of the various neurons and connections of the network. In the case of the image enhancement module 116, the network is trained to fill in information in low-resolution images and generate higher-resolution images approaching the ground truth image.

As known by those skilled in the art, the training of a neural network involves supplying many example input data samples and a corresponding ground truth to the neural network, such that the neural network iteratively learns how to obtain the ground truth from any sample. A difficulty with training a neural network to enhance images is that many different input images are required based on the different issues that may be present in current image capture. For example, a set of images is required with both high-resolution (ground truth) images together with low-resolution/distorted/noisy versions of the same image. Capturing such images can be time consuming and computationally and mechanically expensive. Furthermore, a ground truth, corresponding to a desired result of the enhancement, is generally needed. However, known methods of generating such a ground truth generally involve using one or imaging devices capable of providing a far greater resolution than the imaging devices of the system. A difficulty is that such imaging devices are costly and may not always be available.

The present disclosure proposes a number of techniques for generating input data and the ground truths for training such a neural network, which are illustrated in FIGs 5a-h. Some of these techniques are based on creating a higher-resolution image from a reference image for use as a ground truth, for example by using a high quality camera or using high quality lenses. Other techniques are based on creating a lower-resolution image from a reference image for use as input data, for example by manually setting camera out of focus, adding Gaussian blur, or by down-sampling and then up-sampling.

In a first technique, illustrated in FIG. 5a, images of a PCB may be captured at different resolutions by adjusting the operating parameters of an image capture device used to capture the images. At step 502, an image capture device, such as a 2D camera, may be used to capture an image of the PCB at a first resolution. This may be, for example, the highest pixel resolution possible on the particular image capture device. The image may be a standard 2D photograph, a depth map or other 2D images known in the art. This image may then be used as a ground truth image 308.

At step 504, the operating parameters of the image capture device may be changed to reduce the resolution of captured images. For example, the pixel resolution at which the device captures images may be reduced, for example by using software associated with the image capture device. In another example, a focal distance of the image capture device could be varied such that the image capture device is set out of focus. In further examples, other operating parameters of the image capture device could be changed, such as the exposure time, the sampling duration, or other suitable parameters. One or more operating parameters of the image capture device may be varied at a given time.

At step 506, one or more images may then be captured at the lower resolution. The images may be used as input images 306. One or more of the above parameters may be varied by relatively small increments over a relatively broad parameter range, and images captured with each combination of these parameters, such that a relatively large number of different low-resolution images are captured.

The images can then be used to train the neural network, such that the network learns to increase the resolution of the input images 306 to provide enhanced images approaching the ground truth image 308. Specifically, the neural network is trained to fill the input images with missing information using super-resolution to provide enhanced images.

In a second technique, illustrated in FIG. 5b, images of a PCB may be captured at different resolutions by changing aspects of the hardware of the image capture system used to capture. At step 508, a first image capture device, such as a 2D camera, may be used to capture an image of the PCB at a first, relatively high, pixel resolution. The image may be taken using a certain lens and under certain lighting conditions with the PCB having a certain orientation. This image may then be used as a ground truth image 308.

At step 510, one or more hardware aspects of the image capture system may be changed to reduce the resolution of captured images. For example, a second image capture device, such as a second 2D camera, different from and having a lower pixel resolution than the first image capture device, may be used. In another example, the second image capture device could be the same as the first image capture device, only with the lens changed to a lens having different properties. In another example, the second image capture device could be the same as or different to the first image capture device, with an ambient lighting level or back-lighting level changed, for example by using or more additional, parasitic light sources to selectively light the PCB. In another example, the position or orientation of the PCB with respect to the image capture device may be altered in one or more of three dimensions.

At step 512, one or more images may then be captured using the new hardware setup. The images may be used as input images 306. The captured images can then be used to train the neural network in the manner discussed above.

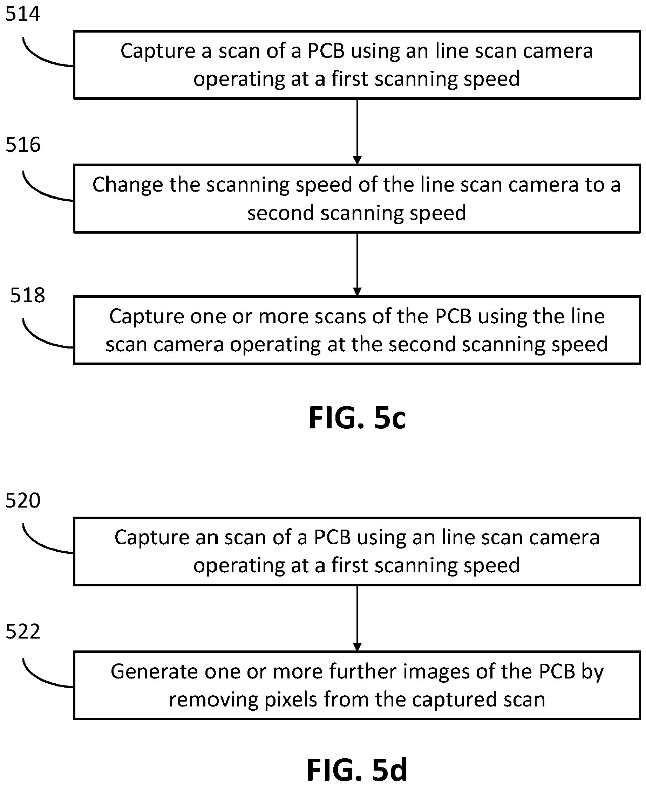

In a third technique, illustrated in FIG. 5c, images of a PCB may be captured using a line scan camera operating at different speeds. At step 514, a first image is captured by performing a first scan of a PCB at a first scanning speed. A line scan camera has a fixed pixel-size perpendicular to a scanning direction. The first scanning speed can be set such that the pixel size parallel to the scanning direction is the same as that perpendicular to a scanning direction, resulting in square pixels.

At step 516, the scanning speed of the line scan camera is changed to a second scanning speed. If the second scanning speed is higher than the first scanning speed, the captured pixels will be rectangular. Specifically, they will be longer along an axis parallel to a scanning direction than along an axis perpendicular to a scanning direction. If the second scanning speed is lower than the first scanning speed, the captured pixels will be rectangular, but in a different sense. Specifically, they will be shorter along an axis parallel to a scanning direction than along an axis perpendicular to a scanning direction.

At step 518, one or more second images are captured by performing a scan of the PCB at the second scanning speed. If the second scanning speed is higher than the first scanning speed the second image would have a lower pixel resolution than the first image. The first image may then be used as a ground truth image 308 and the second image as an input image 306. If the second scanning speed is lower than the first scanning speed, the second image would have a higher pixel resolution than the first image. The second image should therefore be used as the ground truth image 308 and the first image as an input image 306. The captured scan images can then be used to train the neural network in the manner discussed above.

In a fourth technique, illustrated in FIG. 5d, a first image is captured by a line scan camera and then pixels are removed to create a lower resolution image. At step 520, a first image of a PCB may be captured by performing a first scan of a PCB using a line scan camera at a first scanning speed, similar to the third technique. The first scanning speed can be set such that the pixel size parallel to the scanning direction is the same as that perpendicular to a scanning direction, resulting in square pixels. Alternatively, any suitable scanning speed may be used. This image may then be used as a ground truth image 308.

At step 522, one or more second images may be generated by selectively removing pixels from the first image such that the pixel resolution of the first image is reduced. This can be done in many different ways, for example by removing entire lines of pixels, by removing individual pixels, or any combination of these. The second images may then be used as input images 306.

The captured first image and the generated second images can then be used to train the neural network in the manner discussed above.

In some embodiments of the third and fourth techniques, a 3D image capture device such as a 3D laser profilometer may also be used. In this case, a multi-modal image including a depth map and 2D images of the PCB are captured at a given resolution or scanning speed. This resolution corresponds to the pixel resolution and/or scanning speed of the 2D image capture device. A depth map is interpolated from the scanning resolution. To achieve this, a calibration of the 2D camera and the 3D profilometer is performed that yields a spatial mapping. The mapping can be applied to a 3D profile so that it is replaced in the basis of the 2D color image. That way the depth map can be overlapped with the color image. Further depth maps can then be generated by down-sampling and up-sampling this depth map in the scan direction. Down-sampling can be done by removing pixel columns from the depth map. This can be done in a regular or irregular manner. Up-sampling can be done by interpolating the signal along rows to fill the now-missing pixel columns using bilinear interpolation. This results in depth maps of different resolutions being generated. To simulate a faster 3D scanning (for example, one 3D profile every 90 microns instead of every 30 microns) one can down-sample the 30 microns acquisitions by a factor of three, and up-sample it by a factor of three. The resulting image should be approximatively similar to a 90 micron acquisition. Depending on the particular down- and up-sampling techniques used, different images can be used as input images 306 or ground truths 308 based on their resolution. As the scanning time when using a 3D laser profilometer increases linearly with resolution, doubling the number of profiles means doubling the scanning time. The disclosed technique can help to obtain a high-resolution depth map from a low-resolution depth map, so that scanning time can be reduced without sacrificing the scanning resolution.

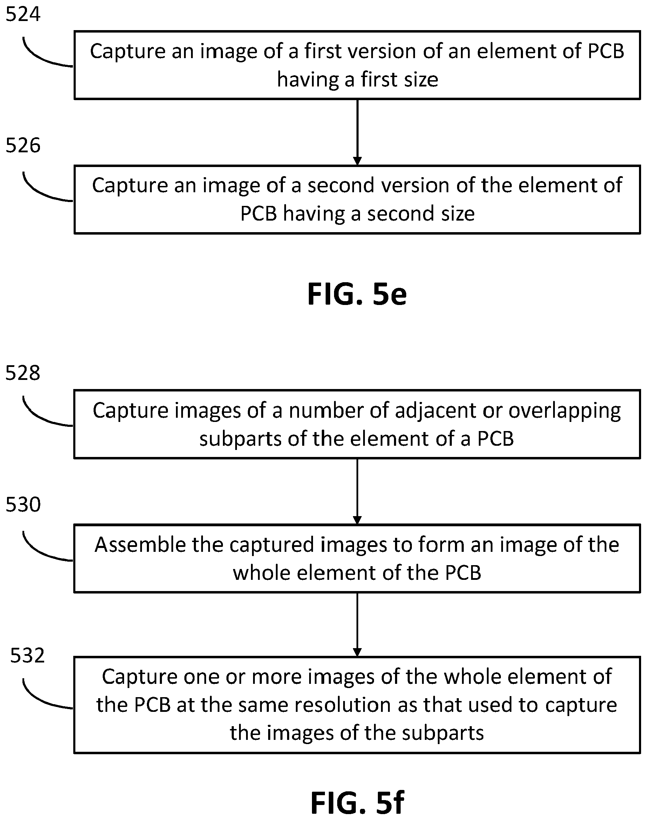

In a fifth technique, illustrated in FIG. 5e, images of differently sized versions of the same element of a PCB may be captured using an image capture device. At step 524, an image capture device, such as a 2D camera, may be used to capture an image of an element of a PCB having a first size. At step 526, an image is taken of a similar element of a PCB having a second size larger than the first size. That is, the second version of the element of the PCB is a scaled up version of the first version of the element. This may for example be a component of a PCB produced in different sizes. The image capture in step 526 may be performed using the same image capture device or an image capture device having the same pixel resolution as that used in step 524. As the first image is of a smaller version of the component but taken at the same capture pixel resolution, the part of the image containing the element of the PCB will contain fewer pixels. At step 528, the image captured in step 526 is down-sampled to this lower number of pixels, and at step 530 it is interpolated back to its original pixel resolution to create a third image. The third image therefore has a higher pixel resolution than the first image, but the same spatial resolution. The third image has the same pixel resolution as the second image, but a lower spatial resolution. The second image can then be used as ground truth image 308 and the third image as an input image 306. The captured images can then be used to train the neural network in the manner discussed above. After the network has been trained, an up-sampled version of the first image, which should have the same pixel and spatial resolution as the third image, can also be applied to the network.

In a sixth technique, illustrated in FIG. 5f, images of various adjacent parts of a PCB may be captured and used to build up a larger image of the PCB. At step 528, images of a number of adjacent or overlapping subparts of the element of the PCB may be captured at a given resolution. At step 530, these images are assembled together to form an image of the whole element of the PCB. As such, the image of the whole element will have a higher resolution than that used to capture the images of the subparts. This image can then be used as a ground truth image 308.

At step 532, one or more images of the whole element of the PCB are captured at the same resolution as that used to capture the images of the subparts. As such, these will have a lower resolution than the assembled image. These images may then be used as input images 306. The captured first image and the generated second images can then be used to train the neural network in the manner discussed above.

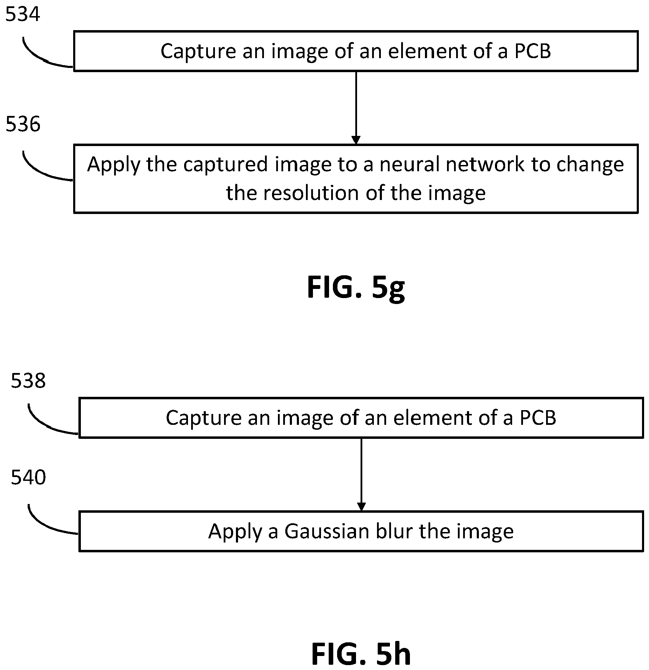

In a seventh technique, illustrated in FIG. 5g, a further neural network may be used to manipulate images. At step 534, an image of an element of a PCB is captured. The image may be captured in one of the ways described above, or in any other suitable manner, such as being generated by an image simulator. At step 536, the captured image is input to a neural network. In one example, the network is a generative adversarial network (GAN) which generates an image having a higher resolution. In another example, the network implements a Neural Style Transfer (NST) algorithm that generates an image having a lower resolution. The different images can be used as input images 306 or ground truths 308 based on their resolution. The images can then be used to train the neural network in the manner discussed above.

In an eighth technique, illustrated in Fig 5h, Gaussian blur is applied to an image. At step 538, a high-resolution image is generated in one of the ways described above, or in any other suitable manner. At step 540, a Gaussian blur is applied to the image, as known in the art. The idea is to simulate the lack of a good focus automation. The original image can be used as aground truths 308 and the blurred image as an input image 306. The images can then be used to train the neural network in the manner discussed above.

The methods disclosed above provide a number of different ways to generate training data for a neural network. It will be appreciated that these techniques can be combined as appropriate to generate images of different types. By generating training data that replicates different issues in current image capture techniques, and using techniques that can generate large volumes of training data, a neural network can be trained to enhance captured images in an accurate and efficient manner. By using a neural network trained in this way to enhance captured images, the performance of a jet printing, PnP or quality inspection system applied to the images can be significantly improved. For example, accurate jet printing, PnP processing or inspection can be performed based on simpler and lower quality imaging systems, and these processes can be faster, as the time taken for high quality imaging is not required.

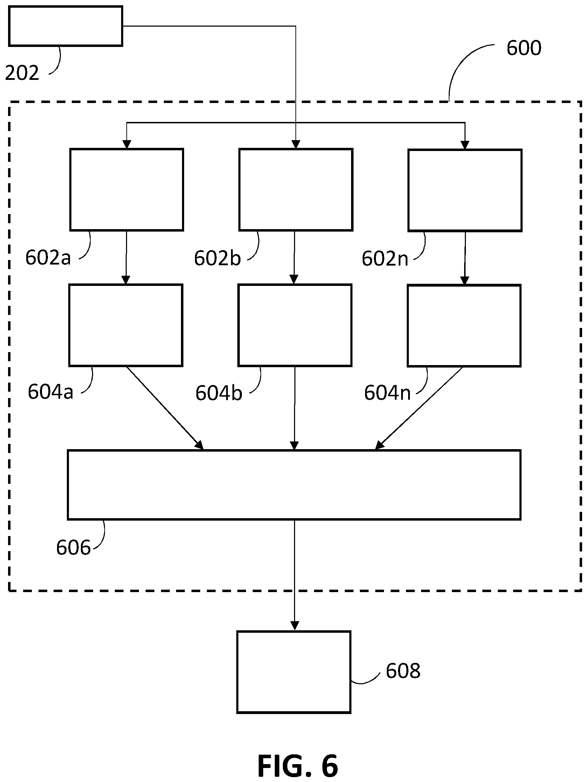

To ensure that the neural network is adequately trained, a loss function may be calculated that describes the performance of the network based on the output of the network and the ground truths. The loss function may also use extra information relating to the PCB, for example CAD data. An example of the loss function is shown schematically in FIG. 6.

The loss function 600 may be based on feature extractions 602a-n, distance computations 604a-n and a mixture function 606. The loss function 600 takes the output of the network 202 and the ground truth (not shown in FIG. 6) and extracts features. The feature extractions 602a-n may include one or several of the following:
- Semantic information extracted with a pre-trained neural network (such as in "perceptual loss" or "content loss")
- Identity function (when output data and a ground truth are directly compared)
- Correlation between channels of intermediate output of a pre-trained neural network (such as in "style loss")
- High-level handcrafted features usually related to the final application the reconstructed image will be used for (such as "edge roughness" or "local average values").

Feature extractions may be applied the same way on ground truth and output data such that each feature extraction 602a-n outputs a feature of the output data of the network and the corresponding ground truth. The feature extractions 602a-n can use auxiliary information such as the theoretical geometry of the scene. For example, the position of a feature of the scene, such as a specific edge or paste-deposit on both the generated image and the ground truth, can be extracted.

The distance computations 604a-n calculate the distance between the features extracted from output data and their respective extracted ground truth. Distance computations may be one of the following:
- L1-norm
- Euclidean norm
- Huber norm
- Cosine distance.

The feature extractions 602a-n and distance computations 604a-n discussed above are examples only, and it will be envisaged that other suitable feature extractions and distance computations could be applied.

The mixture function 606 combines all the distances computed into one loss value 608. The mixture function may be a linear or non-linear combination of the computed distances. It can also use auxiliary information such the theoretical geometry of the scene. For best performance of the neural network, it is intended that the loss value be minimised.

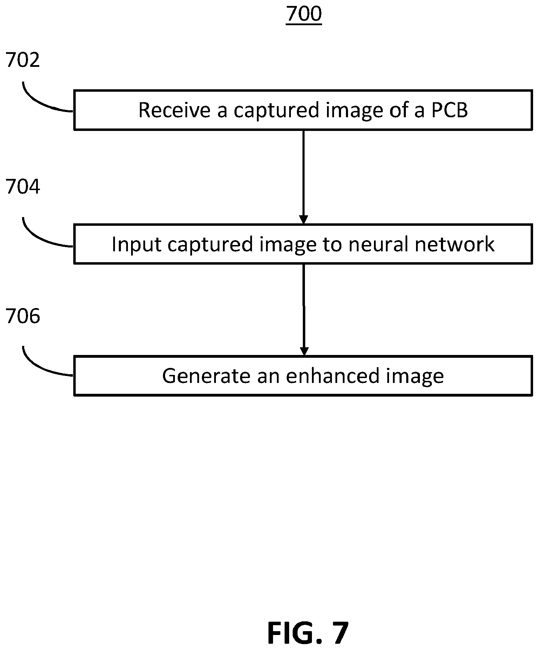

Once the neural network has been adequately trained, it can be implemented in a jet printing, PnP or inspection system, such as in image enhancement module 116. A method 700 for using the neural network in a jet printing, PnP or inspection system is shown in FIG. 7. The method 700 may be performed, for example, by the inspection system 110 shown in FIG. 1.

At step 702, a captured image of at least part of an element of a PCB is received. The image may have been captured using an image capture device of a jet printing system, pick-and-place system or an inspection system, for example the image acquisition system 108 or the camera 112 shown in FIG. 1. The captured image has a first resolution. In some embodiments, the first resolution may correspond to the pixel resolution of the image capture device. In other embodiments, the first resolution may correspond to a spatial resolution captured by the image capture device. In some embodiments, the pixel resolution of the image may be enhanced, whilst the spatial resolution remains the same as that captured by the image capture device.

At step 704, the captured image is input to a neural network. The neural network is the trained neural network 202, discussed above. This may be performed by the control device 114, which provides captured images to the image enhancement module 116 comprising the neural network.

At step 706, the neural network generates an enhanced image of the element of the PCB using the neural network. As the network has been trained to enhance input images, the produced image will have a second resolution higher than the first resolution at which the captured images were captured. The enhanced image can then be used for further evaluation or processing. The enhancement will increase the spatial resolution of the image. The enhancement may also increase the pixel resolution.

In this way, the performance of a jet printing, PnP or quality inspection system applied to the images can be significantly improved. For example, accurate jet printing, PnP processing or inspection can be performed based on simpler and lower quality imaging systems, and these processes can be faster, as the time taken for high quality imaging is not required.

The methods disclosed above enable a neural network to takes low-resolution, noisy or distorted images and output high-resolution images that can be used for accurate jet printing, PnP or inspection functionality. This approach compensates for limitations in current imaging systems, which allows for the implementation of faster jet printing, PnP or inspection systems and processes using the same imaging apparatus as in current approaches. Accurate jet printing, PnP processing or inspection can be performed based on simpler and lower quality imaging systems, even in the case where small, intricate components need to be identified and placed. Furthermore, jet printing, PnP and inspection processes can be sped up, as the time taken for high quality imaging is not required. Images of different resolution can be generated in a number of different ways to ensure that there is sufficient training data to train the neural network adequately. This ensures that the neural network is trained to recognise features and produce high-resolution output even if there are a number of issues with the original image capture.

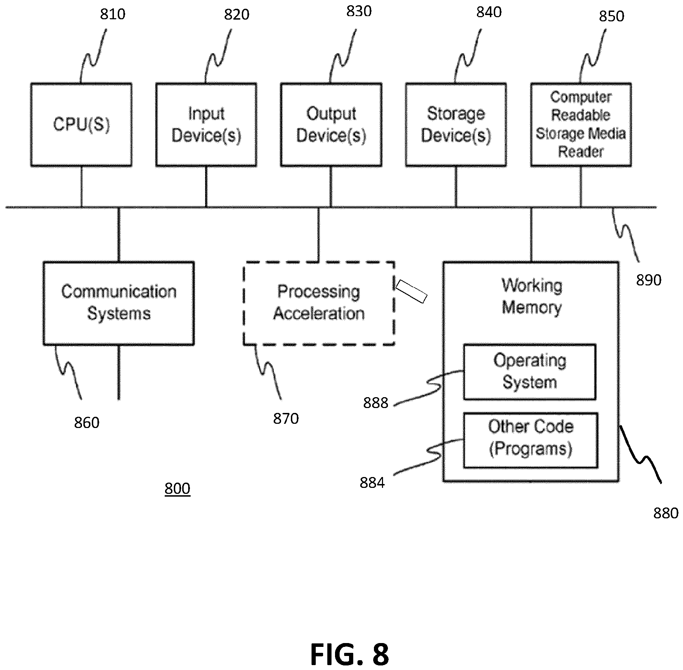

FIG. 8 is a block diagram illustrating an exemplary computer system 800 in which embodiments of the present invention may be implemented. This example illustrates a computer system 800 such as may be used, in whole, in part, or with various modifications, to provide the functions of the disclosed system. For example, various functions may be controlled by the computer system 800, including, merely by way of example, receiving, generating, inputting, an image enhancement module, and a neural network.

The computer system 800 is shown comprising hardware elements that may be electrically coupled via a bus 890. The hardware elements may include one or more central processing units 810, one or more input devices 820 (e.g., a mouse, a keyboard, etc.), and one or more output devices 828 (e.g., a display device, a printer, etc.). The computer system 800 may also include one or more storage device 840. By way of example, the storage device(s) 840 may be disk drives, optical storage devices, solid-state storage device such as a random-access memory ("RAM") and/or a read-only memory ("ROM"), which can be programmable, flash-updateable and/or the like.

The computer system 800 may additionally include a computer-readable storage media reader 850, a communications system 860 (e.g., a modem, a network card (wireless or wired), an infrared communication device, Bluetooth™ device, cellular communication device, etc.), and a working memory 880, which may include RAM and ROM devices as described above. In some embodiments, the computer system 800 may also include a processing acceleration unit 870, which can include a digital signal processor, a special-purpose processor and/or the like. The processing acceleration unit 870 can be a graphics processing unit (GPU) or a tensor processing unit (TPU) with its own memory. It could also be multiple GPUs performing multiple inferences in parallel. The acceleration unit processing acceleration unit 870 can be local to the computer system 800 or implemented remotely.

The computer-readable storage media reader 850 can further be connected to a computer-readable storage medium, together (and, optionally, in combination with the storage device(s) 840) comprehensively representing remote, local, fixed, and/or removable storage devices plus storage media for temporarily and/or more permanently containing computer-readable information. The communications system 860 may permit data to be exchanged with a network, system, computer and/or other component described above.

The computer system 800 may also comprise software elements, shown as being currently located within the working memory 880, including an operating system 888 and/or other code 884. It should be appreciated that alternative embodiments of a computer system 800 may have numerous variations from that described above. For example, customised hardware might also be used and/or particular elements might be implemented in hardware, software (including portable software, such as applets), or both. Furthermore, connection to other computing devices such as network input/output and data acquisition devices may also occur.

Software of the computer system 800 may include code 884 for implementing any or all of the function of the various elements of the architecture as described herein. For example, software, stored on and/or executed by a computer system such as the system 800, can provide the functions of the disclosed system. Methods implementable by software on some of these components have been discussed above in more detail.

The foregoing description of example embodiments has been provided for purposes of illustration and description. It is not intended to be exhaustive or to limit the disclosure. Individual elements or features of a particular embodiment are generally not limited to that particular example embodiment, but, where applicable, are interchangeable and can be used in a selected example embodiment, even if not specifically shown or described. The same may also be varied in many ways. Such variations are not to be regarded as a departure from the disclosure, and all such modifications are intended to be included within the scope of the disclosure.

## Claims

1. A method for training a neural network to generate an image of an element of a printed circuit board "PCB", the method comprising:
generating a first image of at least part of an element of a PCB, the first image having a first resolution;
generating at least one second image of the at least part of the element of the PCB, the second image having a second resolution lower than the first resolution;
using the first image as a ground truth for the neural network; and
using the at least one second image as input training data for the neural network.

2. The method of claim 1, wherein generating the first image comprises capturing an image of the element of the PCB at the first resolution using a first image capture device.

3. The method of claim 2, wherein generating the at least one second image comprises capturing at least one image of the element of the PCB at the second resolution using the first image capture device.

4. The method of claim 2, wherein generating the at least one second image comprises capturing at least one image of the element of the PCB at the second resolution using a second image capture device.

5. The method of claim 1 or 2, wherein generating the first image comprises capturing a scan of the element of the PCB at a first scanning speed.

6. The method of claim 5, wherein generating at least one second image comprises reducing the resolution of the first image from the first resolution to the second resolution by removing one or more pixels from the first image.

7. The method of claim 5, wherein generating at least one second image comprises capturing a scan of the element of the PCB at a second scanning speed higher than the first scanning speed.

8. The method of claim 1 or 2, wherein:
generating the at least one first image comprises capturing an image of a first version of the element of the PCB at the first resolution; and
generating at least one second image comprises capturing an image of a second version of the element of the PCB at the first resolution;
wherein the first version is larger than the second version.

9. The method of claim 1, wherein generating the first image comprises:
capturing an image of each of at least two subparts of the element of the PCB at a third resolution, and
generating an image of the whole element of the PCB from the images of the subparts.

10. The method of claim 9, wherein generating the at least one second image comprises capturing at least one image of the whole element of the PCB at the second resolution.

11. The method of claim 10, wherein the second resolution is equal to the third resolution.

12. The method of claim 1, wherein generating the first image comprises capturing an image of the element of the PCB and applying a generative adversarial network "GAN" to the captured image to generate the first image.

13. The method of claim 1, 2, 5, 9 or 12, wherein generating the at least one second image comprises reducing the resolution of the first image from the first resolution to the second resolution by applying a Neural Style Transfer "NST" algorithm to the first image.

14. A method for generating an image of an element of a printed circuit board "PCB", the method comprising:
receiving a captured image of at least part of an element of a PCB, the captured image having a first resolution;
inputting the captured image to a neural network as defined in any of claims 1 to 13; and
generating an enhanced image of the at least part of the element of the PCB using the neural network, the enhanced image having a second resolution higher than the first resolution.

15. A computer-readable medium having stored thereon instructions that, when executed by one or more processors cause execution of the method of any of claims 1 to 14.
